# EUROPEAN PATENT APPLICATION

(11) **EP 4 418 390 A1**
(43) Date of publication of application: **21.08.2024**
(21) Application number: 22885686.0
(22) Date of filing: 12.10.2022
(51) Int. Cl.: H01M 10/052

(54) **MEMBRANE AND PREPARATION METHOD THEREFOR, SECONDARY BATTERY, BATTERY MODULE, BATTERY PACK, AND POWER CONSUMPTION DEVICE**

(30) Priority: 01.11.2021 CN 202111285301
(71) Applicant: Contemporary Amperex Technology Co., Limited, Ningde, Fujian 352100 (CN)
(72) Inventor: GAO, Jingyu, Ningde, Fujian 352100 (CN)
(74) Representative: Gong, Jinping
(86) International application number: PCT/CN2022/124940
(87) International publication number: WO 2023/071807

(57) **Abstract**

This application provides a separator and a preparation method thereof, a secondary battery, a battery module, a battery pack, and an electric apparatus. The separator provided in this application includes a separator substrate and a carbon layer on at least one surface of the separator substrate, where a functional group for improving surface infiltration is grafted onto a surface on a side, farther away from the separator substrate, of the carbon layer. In this application, providing the carbon layer on the surface of the separator substrate can increase the number and uniformity of grafted functional groups for improving surface infiltration, thereby reducing a contact angle of an electrolyte for the separator and improving an infiltration effect of the electrolyte on the separator. In addition, the carbon layer has a function of protecting the separator substrate, so that the separator substrate is unlikely to be damaged when the functional group for improving surface infiltration is grafted.

## Description

### CROSS-REFERENCE TO RELATED APPLICATIONS

This application claims priority to Chinese Patent Application No. 202111285301.X, filed on November 1, 2021 and entitled "SEPARATOR AND PREPARATION METHOD THEREOF, SECONDARY BATTERY, BATTERY MODULE, BATTERY PACK, AND ELECTRIC APPARATUS", which is incorporated herein by reference in its entirety.

### TECHNICAL FIELD

This application relates to the technical field of lithium batteries, and in particular, to a separator and a preparation method thereof, a secondary battery, a battery module, a battery pack, and an electric apparatus.

### BACKGROUND

In recent years, with increasingly wide use of lithium-ion secondary batteries, lithium-ion secondary batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. A separator of a lithium-ion secondary battery is an important ingredient in the secondary battery in addition to a positive electrode material, a negative electrode material, and an electrolyte, and has critical functions of isolating the positive electrode from the negative electrode and implementing electronic insulation and ion conduction.

However, components of separators of currently used secondary batteries are generally high polymers, which have poor infiltration for the electrolyte, and a poor infiltration effect affects electrochemical performance of battery cells. Therefore, separators of the existing secondary batteries still need to be improved.

### SUMMARY

This application is carried out in view of the above subjects, and is intended to provide a separator, so as to reduce a contact angle of an electrolyte for the separator and improve an infiltration effect of the electrolyte for the separator.

To achieve the foregoing objective, this application provides a separator and a preparation method thereof, a secondary battery, a battery module, a battery pack, and an electric apparatus.

A first aspect of this application provides a separator including a separator substrate and a carbon layer on at least one surface of the separator substrate, where a functional group for improving surface infiltration is grafted onto a surface on a side, farther away from the separator substrate, of the carbon layer.

Therefore, in this application, disposing the carbon layer on the surface of the separator substrate can increase the number and uniformity of grafted functional groups for improving surface infiltration, thereby reducing a contact angle of an electrolyte for the separator, improving infiltration of the electrolyte for the separator, and shortening infiltration time. In addition, the carbon layer has a function of protecting the separator substrate, so that the separator substrate is unlikely to be damaged when the functional group for improving surface infiltration is grafted.

In any embodiment, the functional group for improving surface infiltration is at least one selected from a hydroxyl group and a carboxyl group. The hydroxyl group and the carboxyl group can reduce the contact angle of the electrolyte for the separator and improve the infiltration of the electrolyte for the separator.

In any embodiment, a percentage of the number of functional groups for improving surface infiltration is 4% to 12%. Setting the percentage of the number of functional groups for improving surface infiltration within the foregoing range can help exert, to a great extent, the improvement effect of the functional group for improving surface infiltration on the infiltration for the separator without damaging the separator substrate.

In any embodiment, a contact angle between the carbon layer and the electrolyte is 64.9° to 110.6°. Setting the contact angle between the carbon layer and the electrolyte within the foregoing range can help exert, to a great extent, the improvement effect of the functional group for improving surface infiltration on the infiltration for the separator without damaging the separator substrate.

In any embodiment, a thickness ratio of the separator substrate to the carbon layer is 24:0.02 to 24:0.175, or preferably, 24:0.075 to 24:0.125. Setting the thickness ratio of the separator substrate to the carbon layer within the foregoing range can not only alleviate the damage to the separator substrate during the oxygen plasma treatment, but also ensure rapid migration of lithium ions in the separator.

In any embodiment, a thickness of the carbon layer is 20 nm to 175 nm, preferably 75 nm to 125 nm. Setting the thickness of the carbon layer within the foregoing range can not only alleviate the damage to the separator substrate during the oxygen plasma treatment, but also ensure rapid migration of lithium ions in the separator.

In any embodiment, the separator substrate includes a polymer film, a ceramic coating, and a polymer adhesion coating, where the ceramic coating is located between the polymer film and the polymer adhesion coating, and the carbon layer is located on a surface on a side, farther away from the ceramic coating, of the polymer adhesion coating, where the polymer film is at least one selected from a polypropylene film and a polyethylene film. Disposing the ceramic coating and the polymer adhesion coating on the surface of the polymer film in sequence can improve thermal stability and adhesion of the separator. Disposing the carbon layer on the surface on the side, farther away from the ceramic coating, of the polymer adhesion coating facilitates grafting of the functional group for improving surface infiltration onto the surface of the carbon layer.

A second aspect of this application further provides a preparation method of a separator. The method includes: preparing a carbon layer on a surface of a separator substrate; and grafting a functional group for improving surface infiltration onto a surface on a side, farther away from the separator substrate, of the carbon layer.

Therefore, preparing the carbon layer on the surface of the separator substrate can increase the number of grafted functional groups for improving surface infiltration and also enable the functional groups for improving surface infiltration to be uniformly grafted onto the surface of the carbon layer. Grafting the functional group for improving surface infiltration onto the surface of the separator substrate can reduce the contact angle of the electrolyte for the separator, improve the infiltration of the electrolyte for the separator, shorten the infiltration time, and improve production efficiency. In addition, the carbon layer has a function of protecting the separator substrate, so that the separator substrate is unlikely to be damaged when the functional group for improving surface infiltration is grafted.

In any embodiment, the carbon layer is deposited on the surface of the separator substrate via a methane plasma treatment. The carbon layer is deposited via the methane plasma treatment, and a treatment atmosphere is methane without another reagent, so that no other impurities are introduced into the product during the treatment and no other products are generated, which is green, environment-friendly, and pollution-free.

In any embodiment, time of the methane plasma treatment is 1 minute to 30 minutes, preferably 10 minutes to 20 minutes. Setting the time of the methane plasma treatment within the foregoing range can not only alleviate the damage to the separator substrate during the oxygen plasma treatment, but also ensure rapid migration of lithium ions in the separator.

In any embodiment, the functional group for improving surface infiltration is grafted onto the surface on the side, farther away from the separator substrate, of the carbon layer via an oxygen plasma treatment. Grafting the functional group for improving surface infiltration via the oxygen plasma treatment is treating the surface of the carbon layer, and a treatment atmosphere is oxygen, without another reagent, so that no other impurities are introduced into the product during the treatment and no other products are generated, which is green, environment-friendly, and pollution-free.

In any embodiment, time of the oxygen plasma treatment is 1 minute to 50 minutes, preferably 20 minutes to 30 minutes. The time of the oxygen plasma treatment is set within the foregoing range, so that more functional groups for improving surface infiltration can be grafted, thereby reducing the contact angle of the electrolyte for the separator, improving the infiltration of the electrolyte for the separator, and shortening infiltration time.

A third aspect of this application provides a secondary battery including the separator in the first aspect of this application or the separator prepared in the method in the second aspect of this application.

A fourth aspect of this application provides a battery module including the secondary battery in the third aspect of this application.

A fifth aspect of this application provides a battery pack including the battery module in the fourth aspect of this application.

A sixth aspect of this application provides an electric apparatus including at least one selected from the secondary battery in the third aspect of this application, the battery module in the fourth aspect of this application, or the battery pack in the fifth aspect of this application.

This application has the following beneficial effects:

This application provides a separator and a preparation method thereof, a secondary battery, a battery module, a battery pack, and an electric apparatus. Disposing the carbon layer on the surface of the separator substrate can increase the number and uniformity of grafted functional groups for improving surface infiltration, thereby reducing the contact angle of the electrolyte for the separator, improving the infiltration of the electrolyte for the separator, and shortening the infiltration time. In addition, the carbon layer has the function of protecting the separator substrate, so that the separator substrate is unlikely to be damaged when the functional group for improving surface infiltration is grafted.

### BRIEF DESCRIPTION OF DRAWINGS

FIG. 1 is a schematic structural diagram of a separator according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to an embodiment of this application in FIG. 5.
FIG. 7 is a schematic diagram of an electric apparatus using a secondary battery as a power supply according to an embodiment of this application.
FIG. 8 is a scanning electron microscope image of a separator prepared in Example 1 of this application.
FIG. 9 is an elemental plane scanning analysis diagram of an edge section of the separator prepared in Example 1 of this application.
FIG. 10 is an elemental plane scanning analysis diagram of an edge section of a carbon layer in the separator prepared in Example 1 of this application.
FIG. 11 is an elemental plane scanning analysis diagram of an edge section of a CCS layer in the separator prepared in Example 1 of this application.
FIG. 12 is an infrared spectrogram of separators prepared in Example 1 and Comparative Example 1 of this application.
FIG. 13 is a diagram of a test result of a contact angle of the separator prepared in Example 1 of this application.
FIG. 14 is a diagram of a test result of a contact angle of the separator prepared in Comparative Example 1 of this application.

Description of reference signs:
11. separator substrate; 12. carbon layer; 13. functional group for improving surface infiltration; 1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses in detail embodiments of a separator and a preparation method thereof, a secondary battery, a battery module, a battery pack, and an electric apparatus in this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, this is equivalent to disclosure that the parameter is, for example, an integer among 2, 3, 4, 5, 6, 7, 8, 9, 10, 11, 12, and the like.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

The applicant has found through research that an ingredient of separators used in existing secondary batteries is generally a high polymer such as polypropylene, and has low porosity, and therefore, it is difficult for an electrolyte to enter internal space of the separator. If the electrolyte does not fully infiltrate into the separator, an ion pass rate of the separator is low, which affects electrochemical performance of a battery cell, for example, reduces rate performance and cycling performance of the battery cell and shortens service life. Therefore, during actual production, the electrolyte needs to be left standing at a high temperature for a certain time so that the electrolyte fully infiltrates into the separator. However, long standing time prolongs production time of the secondary battery, which reduces production efficiency and increases production costs.

To improve infiltration of the electrolyte for the separator and shorten the infiltration time, the applicant has found through research that a functional group for improving surface infiltration can be grafted onto a surface of a separator substrate, thereby reducing a contact angle of the electrolyte for the separator, improving the infiltration for the separator, and shortening the infiltration time. However, when the functional group for improving surface infiltration is directly grafted onto the surface of the separator substrate, the functional group for improving surface infiltration is difficultly grafted onto the surface of the separator substrate uniformly, and the number of grafted functional groups for improving surface infiltration is limited. In addition, when the functional group for improving surface infiltration is grafted, the separator substrate is likely to be damaged.

To further solve the problem of grafting uniformity of the functional group for improving surface infiltration and the problem of damage prevention of the separator substrate when the functional group for improving surface infiltration is grafted, the inventor has found through in-depth research that before the functional group for improving surface infiltration is grafted, depositing a carbon layer on at least one surface of the separator substrate increases the number of grafted functional groups for improving surface infiltration and also enables the functional groups for improving surface infiltration to be uniformly grafted onto a surface on a side, farther away from the separator substrate, of the carbon layer; and the carbon layer has a function of protecting the separator substrate, so that the separator substrate is unlikely to be damaged when the functional group for improving surface infiltration is grafted, thereby implementing effects of improving the infiltration of the electrolyte for the separator and shortening the infiltration time.

The separator provided in this application can be used in a secondary battery. The secondary battery can be used in electric apparatuses including but not limited to vehicles, ships, or aircraft. The secondary battery and the like disclosed in this application may be used to constitute a power supply system of the electric apparatus, which helps reduce a contact angle of the electrolyte for the separator, improve the infiltration of the electrolyte for the separator, shorten the infiltration time, and improve production efficiency, thereby helping increase a capacity retention rate of the secondary battery and improve performance stability and service life of the secondary battery.

This application provides an electric apparatus using a secondary battery as a power supply. The electric apparatus may be but is not limited to a mobile phone, a tablet, a laptop computer, an electric toy, an electric tool, an electric bicycle, an electric vehicle, a ship, or a spacecraft. The electric toy may include an immobilized or mobile electric toy, for example, a game console, an electric toy car, an electric toy ship, and an electric toy airplane. The spacecraft may include an airplane, a rocket, a space shuttle, a spaceship, and the like.

To reduce the contact angle of the electrolyte for the separator, improve the infiltration of the electrolyte for the separator, and shorten the infiltration time, this application provides a separator and a preparation method thereof, a secondary battery, a battery module, a battery pack, and an electric apparatus.

### Separator

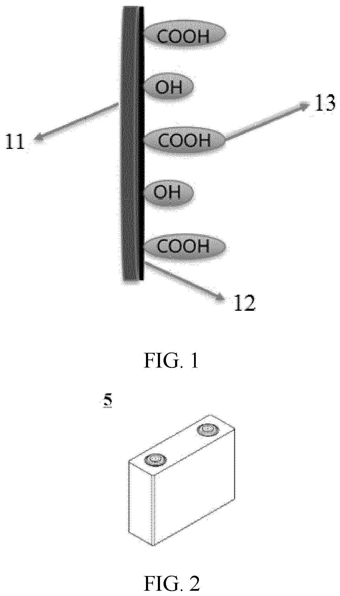

In an embodiment of this application, this application proposes a separator. FIG. 1 shows a schematic structural diagram of the separator. The separator includes a separator substrate 11 and a carbon layer 12 on at least one surface of the separator substrate 11, and a functional group 13 for improving surface infiltration is grafted onto a surface on a side, farther away from the separator substrate 11, of the carbon layer 12.

The functional group for improving surface infiltration in this application refers to a functional group that can improve the infiltration of the electrolyte for the separator.

Although a mechanism is unclear, the applicant has accidentally found that grafting the functional group for improving surface infiltration onto the surface of the separator substrate in this application can enhance the infiltration for the separator, and shorten high-temperature standing time for full infiltration of the electrolyte for the separator, thereby shortening production time of the secondary battery and improving the production efficiency. In addition, before the functional group for improving surface infiltration is grafted, depositing a carbon layer on at least one surface of the separator substrate can increase the number of grafted functional groups for improving surface infiltration and also enable the functional groups for improving surface infiltration to be uniformly grafted onto a surface on a side, farther away from the separator substrate, of the carbon layer; and the carbon layer has a function of protecting the separator substrate, so that the separator substrate is unlikely to be damaged when the functional group for improving surface infiltration is grafted, thereby implementing effects of reducing the contact angle of the electrolyte for the separator, improving the infiltration of the electrolyte for the separator, and shortening the infiltration time.

In some embodiments, the functional group for improving surface infiltration is at least one selected from a carboxyl group (-COOH) and a hydroxyl group (-OH). The hydroxyl group and the carboxyl group can reduce the contact angle of the electrolyte for the separator and improve the infiltration of the electrolyte for the separator.

In some embodiments, a percentage of the number of functional groups for improving surface infiltration is 4% to 12%.

The percentage of the number in this application refers to a ratio of the number of functional groups for improving surface infiltration that are grafted onto the surface on the side, farther away from the separator substrate, of the carbon layer to the number of all functional groups on the surface. Herein, all functional groups on the surface refer to all functional groups that can be detected via infrared spectroscopy, including functional groups for improving surface infiltration, hydrogen, an alkyl group, an olefin group and the like. If the percentage of the number of functional groups for improving surface infiltration is relatively high, the carbon layer and the separator substrate may be damaged when the functional group for improving surface infiltration is grafted. If the percentage of the number of functional groups for improving surface infiltration is relatively low, the functional group for improving surface infiltration has a limited improvement effect on the infiltration for the separator. Therefore, the inventor of this application believes that setting the percentage of the number of functional groups for improving surface infiltration within a range of 4% to 12% can help exert, to a great extent, the improvement effect of the functional group for improving surface infiltration on the infiltration for the separator without damaging the separator substrate.

In some embodiments, a contact angle between the carbon layer and the electrolyte is 64.9° to 110.6°. If the contact angle between the carbon layer and the electrolyte is small, more functional groups for improving surface infiltration need to be grafted, and the carbon layer and the separator substrate may be damaged during grafting. If the contact angle between the carbon layer and the electrolyte is large, fewer grafted functional groups for improving surface infiltration have a limited improvement effect on the infiltration for the separator. Therefore, the inventor of this application believes that setting the contact angle between the carbon layer and the electrolyte within a range of 64.9° to 110.6° can help exert, to a great extent, the improvement effect of the functional group for improving surface infiltration on the infiltration for the separator without damaging the separator substrate.

A type of the electrolyte is not limited in this application, as long as the objective of this application can be achieved. For example, the electrolyte may be an electrolyte of a lithium-ion secondary battery, and the electrolyte of the lithium-ion secondary battery includes an electrolytic salt and a solvent. The electrolytic salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate. The solvent is at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, a thickness ratio of the separator substrate to the carbon layer is 24:0.02 to 24:0.175, preferably 24:0.075 to 24:0.125. If the thickness ratio of the separator substrate to the carbon layer is relatively small, that is, the thickness of the carbon layer is larger, a migration velocity of lithium ions in the separator is limited, thereby affecting electrochemical performance of the battery cell. If the thickness ratio of the separator substrate to the carbon layer is relatively large, that is, the thickness of the carbon layer is smaller, it is impossible to effectively avoid damage of oxygen plasma to the separator substrate when the functional group for improving surface infiltration is grafted. Therefore, the inventor of this application believes that setting the thickness ratio of the separator substrate to the carbon layer within a range of 24:0.02 to 24:0.175 can not only alleviate the damage of oxygen plasma to the separator substrate, but also ensure rapid migration of lithium ions in the separator. When the thickness ratio of the separator substrate to the carbon layer is set within a preferred range of 24:0.075 to 24:0.125, a high specific surface area and a porous structure of the carbon layer can provide rich active sites for lithium ions, and good interface compatibility with the electrolyte is implemented, which can reduce interface resistance and further increase a capacity retention rate of the secondary battery.

In some embodiments, a thickness of the carbon layer is 20 nm to 175 nm, preferably 75 nm to 125 nm. If the thickness of the carbon layer is large, a migration velocity of lithium ions in the separator is limited, thereby affecting electrochemical performance of the battery cell. If the thickness of the carbon layer is small, it is impossible to effectively avoid damage of oxygen plasma to the separator substrate when the functional group for improving surface infiltration is grafted. Therefore, the inventor of this application believes that setting the thickness of the carbon layer within a range of 20 nm to 175 nm can not only alleviate the damage of oxygen plasma to the separator substrate, but also ensure rapid migration of lithium ions in the separator. When the thickness of the carbon layer is set within a preferred range of 75 nm to 125 nm, a high specific surface area and a porous structure of the carbon layer can provide rich active sites for lithium ions, and good interface compatibility with the electrolyte is implemented, which can reduce interface resistance and further increase a capacity retention rate of the secondary battery.

In some embodiments, the separator substrate includes a polymer film, a ceramic coating (hereinafter referred to as a CCS layer), and a polymer adhesion coating (hereinafter referred to as PCS layer), the CCS layer is located between the polymer film and the PCS layer, and the carbon layer is located on a surface on a side, farther away from the CCS layer, of the PCS layer, where the polymer film is at least one selected from a polypropylene film and a polyethylene film.

In this application, the polymer film is at least one selected from the polypropylene film and the polyethylene film, which can isolate a positive electrode from a negative electrode and allow ions other than electrons to pass through. Disposing the CCS layer on the surface of the polymer film can improve thermal stability. Disposing the PCS layer on the surface on the side, farther away from the polymer film, of the CCS layer can improve adhesion. Disposing the carbon layer on the surface on the side, farther away from the CCS layer, of the PCS layer facilitates grafting of the functional group for improving surface infiltration onto the surface of the carbon layer.

The thickness of the polymer film, the thickness of the CCS layer, and the thickness of the PCS layer in the separator substrate are not limited in this application, as long as the objective of this application can be achieved. For example, the thickness of the polymer film is 5 µm to 50 µm, the thickness of the CCS layer is 3 µm, and the thickness of the PCS layer is 1 µm.

The CCS layer in this application refers to a coating containing a ceramic material, and the ceramic material is at least one selected from SiO₂, TiO₂, ZrO₂, Al₂O₃, MgO, and SiC. In some embodiments, the CCS layer further optionally includes a binder, and the binder is at least one selected from polyvinylidene fluoride (PVDF), vinylidene fluoride-tetrafluoroethylene-propylene terpolymer, vinylidene fluoride-hexafluoropropylene-tetrafluoroethylene terpolymer, polyurethane (PU), and styrene-acrylic latex (SA).

The PCS layer in this application refers to a coating containing a polymer adhesive, and the polymer adhesive is at least one selected from polyvinylidene fluoride (PVDF), vinylidene fluoride-tetrafluoroethylene-propylene terpolymer, vinylidene fluoride-hexafluoropropylene-tetrafluoroethylene terpolymer, polyurethane (PU), and styrene-acrylic latex (SA).

A preparation method of the separator substrate is not limited in this application, as long as the objective of this application can be achieved. For example, the CCS layer can be applied on the polymer film and then the PCS layer is applied on the CCS layer to obtain the separator substrate. Methods of applying the CCS layer on the polymer film and applying the PCS layer on the CCS layer are methods commonly used in the art, and are not limited herein.

### Preparation method of separator

In an embodiment of this application, this application provides a preparation method of a separator. The method includes: preparing a carbon layer on a surface of a separator substrate; and grafting a functional group for improving surface infiltration onto a surface on a side, farther away from the separator substrate, of the carbon layer.

In this application, before the functional group for improving surface infiltration is grafted, depositing a carbon layer on at least one surface of the separator substrate can increase the number of grafted functional groups for improving surface infiltration and also enable the functional groups for improving surface infiltration to be uniformly grafted onto a surface on a side, farther away from the separator substrate, of the carbon layer; and the carbon layer has a function of protecting the separator substrate, so that the separator substrate is unlikely to be damaged when the functional group for improving surface infiltration is grafted. Grafting the functional group for improving surface infiltration onto the surface of the separator substrate can enhance the infiltration for the separator, shorten the infiltration time, and improve the production efficiency.

In some embodiments, the carbon layer is deposited on the surface of the separator substrate via a methane plasma treatment.

In this application, the carbon layer is deposited on the surface on the side, farther away from the CCS layer, of the PCS layer of the separator substrate via the methane plasma treatment, and a treatment atmosphere is methane, without another reagent, so that no other impurities are introduced into the product during the treatment and no other products are generated, which is green, environment-friendly, and pollution-free and has greater advantages in a process and operation than another carbon deposition method.

In some embodiments, time of the methane plasma treatment is 1 minute to 30 minutes, preferably 10 minutes to 20 minutes.

During the methane plasma treatment used in this application, different treatment times cause different thicknesses of deposited carbon layers. If time of the methane plasma treatment is excessively long, a thickness of the carbon layer is large, which limits a migration velocity of lithium ions in the separator, thereby affecting the electrochemical performance of the battery cell. If the time of the methane plasma treatment is excessively short, the thickness of the carbon layer is small, making it impossible to effectively avoid damage of oxygen plasma to the separator substrate when the functional group for improving surface infiltration is grafted. Therefore, the inventor of this application believes that controlling the time of the methane plasma treatment within the above range of 1 minute to 30 minutes and setting the thickness of the deposited carbon layer as appropriate to 20 nm to 175 nm can not only alleviate the damage of oxygen plasma to the separator substrate, but also ensure rapid migration of lithium ions in the separator. Controlling the time of the methane plasma treatment within a preferred range of 10 minutes to 20 minutes and setting the thickness of the deposited carbon layer to 75 nm to 125 nm can further increase the capacity retention rate of the secondary battery.

In this application, power of the methane plasma used for the methane plasma treatment is not limited, as long as the objective of this application can be achieved. For example, the methane plasma with power of 100 W to 200 W is used for the treatment.

In this application, temperature during the methane plasma treatment is not limited, as long as the objective of this application can be achieved. For example, the methane plasma treatment is carried out at 25°C.

In some embodiments, the functional group for improving surface infiltration is grafted onto the surface on the side, farther away from the separator substrate, of the carbon layer via an oxygen plasma treatment.

In this application, grafting the functional group for improving surface infiltration onto the surface on the side, farther away from the separator substrate, of the carbon layer can enhance the infiltration for the separator, shorten the infiltration time, and improve the production efficiency. Grafting the functional group for improving surface infiltration via the oxygen plasma treatment is treating the surface of the carbon layer, and a treatment atmosphere is oxygen, without another reagent, so that no other impurities are introduced into the product during the treatment and no other products are generated, which is green, environment-friendly, and pollution-free and has greater advantages in a process and operation than another method of grafting the functional group for improving surface infiltration.

In some embodiments, time of the oxygen plasma treatment is 1 minute to 50 minutes, preferably 20 minutes to 30 minutes.

In the oxygen plasma treatment used in this application, different treatment times cause different numbers of grafted functional groups for improving surface infiltration. If the time of the oxygen plasma treatment is excessively short, the number of grafted functional groups for improving surface infiltration is small, which cannot exert, to a maximum extent, an improvement effect of the functional group for improving surface infiltration on the infiltration for the separator. If the time of the oxygen plasma treatment is excessively long, the carbon layer and the PCS layer may be damaged, thereby damaging the separator substrate. Therefore, the time of the oxygen plasma treatment is controlled within the above range of 1 minute to 50 minutes, so that more functional groups for improving surface infiltration can be grafted, thereby reducing the contact angle of the electrolyte for the separator, improving the infiltration of the electrolyte for the separator, and shortening infiltration time. Controlling the time of the oxygen plasma treatment within a preferred range of 20 minutes to 30 minutes can further increase the number of grafted functional groups for improving surface infiltration without damaging the carbon layer and the PCS layer, which helps improve the infiltration for the separator in the electrolyte, improve migration efficiency of lithium ions, and increase the capacity retention rate of the secondary battery.

In this application, power of the oxygen plasma used for the oxygen plasma treatment is not limited, as long as the objective of this application can be achieved. For example, the oxygen plasma with power of 100 W to 200 W is used for the treatment.

In this application, temperature during the oxygen plasma treatment is not limited, as long as the objective of this application can be achieved. For example, the oxygen plasma treatment is carried out at 25°C.

In addition, the following describes a secondary battery, a battery module, a battery pack, and an electric apparatus in this application with appropriate reference to the accompanying drawings.

An embodiment of this application provides a secondary battery.

Generally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is sandwiched between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer arranged on at least one surface of the positive electrode current collector.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer may further optionally include a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive and a positive electrode film-forming additive, or may include an additive that can improve some performance of batteries, for example, an additive for improving over-charge performance of batteries and an additive for improving high-temperature performance or low-temperature performance of batteries.

### [Separator]

In some embodiments, the secondary battery further includes the separator provided in this application.

In some embodiments, the positive electrode plate, the negative electrode plate, and the separator may be made into an electrode assembly through winding or lamination.

In some embodiments, the secondary battery may include an outer package. The outer package can be configured to package the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

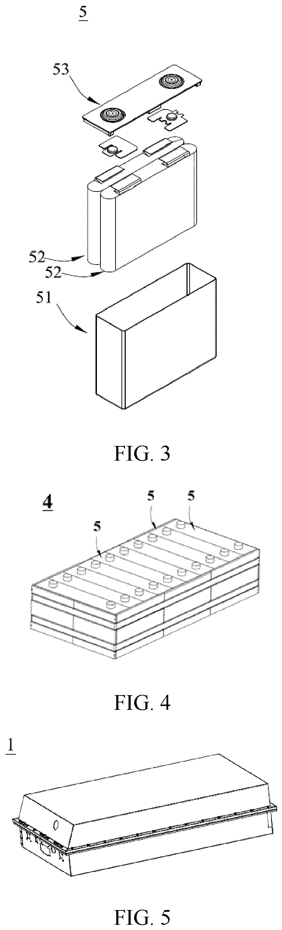

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening in communication with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates into the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

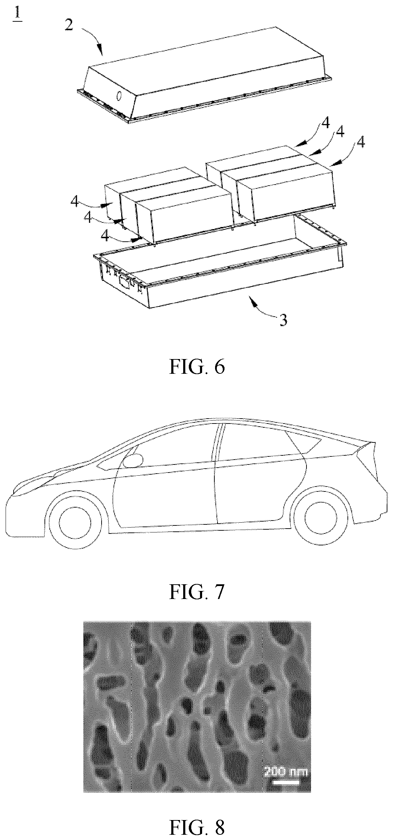

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power supply for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy the requirements of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power supply.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

A plasma apparatus used in the following examples is COVANCE-1MPR plasma surface treatment equipment of Femto Science in South Korea.

### Example 1

A 20 µm thick polypropylene film was used as a bare film, and a 3 µm thick CCS layer was applied on the surface of the polypropylene film, and then a 1 µm thick PCS layer was applied on the surface of the CCS layer, to obtain a separator substrate.

The separator substrate was placed in the plasma apparatus and treated with methane plasma with power of 100 W for 15 minutes at 25°C to deposit a carbon layer on the surface on the side, farther away from the CCS layer, of the PCS layer.

The separator substrate treated via methane plasma was placed in the plasma apparatus and treated with oxygen plasma with power of 100 W for 25 minutes at 25°C to graft a functional group for improving surface infiltration onto a surface on a side, farther away from the separator substrate, of the carbon layer, to obtain a separator.

### Examples 2 to 7

The examples were the same as Example 1 except that the time of the methane plasma treatment and the time of the oxygen plasma treatment shown in Table 1 were adjusted.

### Comparative Example 1

A 20 µm thick polypropylene film was used as a bare film, and a 3 µm thick CCS layer was applied on the surface of the polypropylene film, and then a 1 µm thick PCS layer was applied on the surface of the CCS layer, to obtain a separator.

Performance of the separators prepared in Examples 1 to 7 and Comparative Example 1 was tested.

### 1. Morphology and thickness tests of carbon layer

The separators in Examples 1 to 7 and Comparative Example 1 were tested via a ZEISS sigma 300 scanning electron microscope according to Standard JY/T010-1996. Test parts included a surface of the separator and a section of an edge, the section was subjected to an elemental plane scanning analysis, and a thickness of the carbon layer in the separator was calculated.

### 2. Test of functional group for improving surface infiltration

The separators prepared in Examples 1 to 7 and Comparative Example 1 were subjected to the infrared spectrum analysis test by using a VERTEX 70 Fourier transform infrared spectrometer according to Standard GB/T6040-2002, to obtain an infrared spectrogram.

According to Lambert-Beer law, absorbance of functional groups at a characteristic wavelength is directly proportional to molar concentrations of the functional groups. A peak area in the infrared spectrogram was used to characterize the absorbance, a molar concentration ratio of a specific functional group to all functional groups could be obtained by using a ratio of the peak area of the specific functional group to all peak areas, and then a ratio of the number of the specific functional group to the number of all the functional groups could be obtained.

Ratios of peak areas corresponding to a hydroxyl group and a carboxyl group to all peak areas in each spectrum were calculated, and percentages of numbers of the hydroxyl group and the carboxyl group in the number of all functional groups on the surface of the carbon layer were obtained after analyses.

### 3. Contact angle test

Contact angles of the separators prepared in Examples 1 to 7 and Comparative Example 1 were tested by using an SL200KS contact angle tester of Kono in the United States, that is, a value of a contact angle formed by adding the electrolyte onto the separator dropwise was measured. The used electrolyte was a 1 mol/L lithium hexafluorophosphate solution, and solvents in the lithium hexafluorophosphate solution were ethylene carbonate and dimethyl carbonate in a volume ratio of 1:1.

Test results are shown in Table 1 and FIG. 8 to FIG. 14.

**Table 1 Parameter results of Examples 1 to 7 and Comparative Example 1**

| | Separator substrate | Time of methane plasma treatment (minute) | Time of oxygen plasma treatment (minute) | Thickness ratio of separator substrate to carbon layer | Thickness of carbon layer (µm) | Percentage of the number of functional groups for improving surface infiltration | Contact angle |
|---|---|---|---|---|---|---|---|
| Example 1 | Polypropylene film + CCS layer + PCS layer | 15 | 25 | 24:0.1 | 100 | 12% | 64.9° |
| Example 2 | Polypropylene film + CCS layer + PCS layer | 5 | 25 | 24:0.05 | 50 | 12% | 64.9° |
| Example 3 | Polypropylene film + CCS layer + PCS layer | 25 | 25 | 24:0.15 | 150 | 12% | 64.9° |
| Example 4 | Polypropylene film + CCS layer + PCS layer | 15 | 5 | 24:0.1 | 100 | 4% | 110.6° |
| Example 5 | Polypropylene film + CCS layer + PCS layer | 15 | 15 | 24:0.1 | 100 | 8% | 92.3° |
| Example 6 | Polypropylene film + CCS layer + PCS layer | 15 | 35 | 24:0.1 | 100 | 11% | 71.8° |
| Example 7 | Polypropylene film + CCS layer + PCS layer | 15 | 45 | 24:0.1 | 100 | 10% | 76.9° |
| Comparative Example 1 | Polypropylene film + CCS layer + PCS layer | 0 | 0 | / | 0 | 2% | 125.4° |

| | | | | | | | |
|---|---|---|---|---|---|---|---|
| Note: "/" indicates that this value does not exist. | | | | | | | |

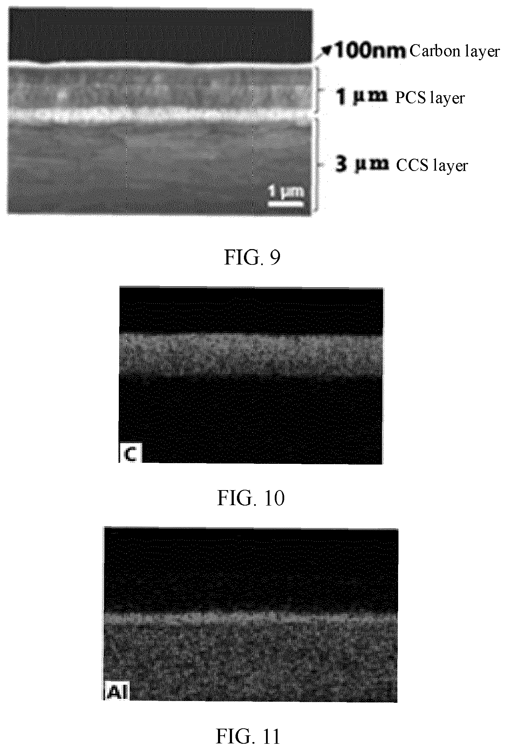

FIG. 8 is a scanning electron microscope image of a separator prepared in Example 1. FIG. 9 to FIG. 11 are elemental plane scanning analysis diagrams of an edge section of the separator prepared in Example 1. It can be seen from FIG. 8 that the separator is a porous structure, so that lithium ions can pass through the pores. It can be seen from FIG. 9 that the separator sequentially includes a 3 µm CCS layer, a 1 µm PCS layer, and a 100 nm carbon layer from bottom to top. It can be seen from FIG. 10 that the separator includes a carbon layer. It can be seen from FIG. 11 that the separator includes a CCS layer containing element Al.

Based on the results in Table 1, it can be seen from Examples 1 to 3 that the time of the methane plasma treatment affects the thickness of the carbon layer. A longer time of the methane plasma treatment leads to a larger thickness of the carbon layer. In addition, the time of the methane plasma treatment is within a scope in this application, a thickness ratio obtained of the separator substrate to the carbon layer is moderate, the thickness of the carbon layer is moderate, and the number of grafted functional groups for improving surface infiltration is not affected, which can not only alleviate the damage of the oxygen plasma to the separator substrate, but also ensure rapid migration of lithium ions in the separator.

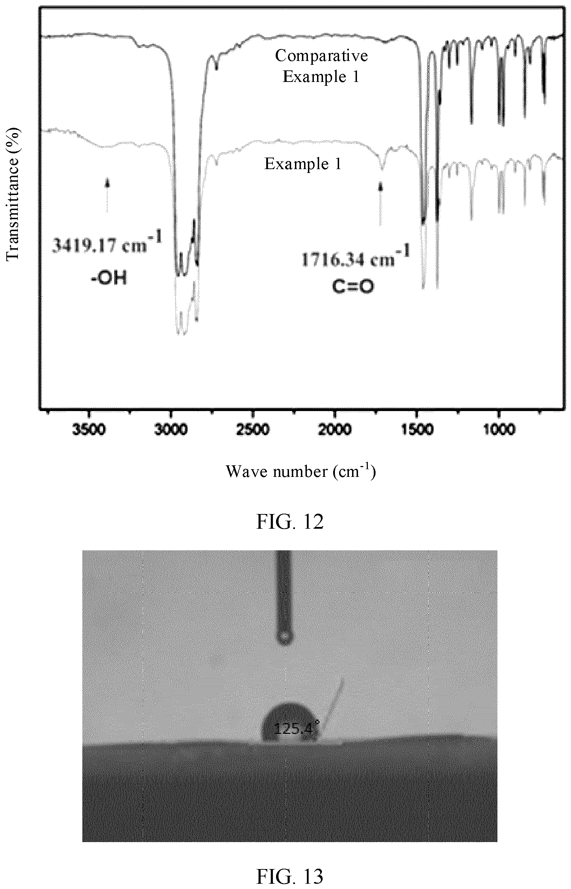

FIG. 12 is an infrared spectrogram of separators prepared in Example 1 and Comparative Example 1 of this application. It can be seen from FIG. 12 that there are characteristic peaks at both wavenumbers of 1716.34 cm⁻¹ and 3419.17 cm⁻¹, corresponding to a carboxyl group and a hydroxyl group respectively, which indicates that the carboxyl group and the hydroxyl group are grafted on the surface of each of the separators prepared in Example 1 and Comparative Example 1, that is, the functional groups for improving surface infiltration are included.

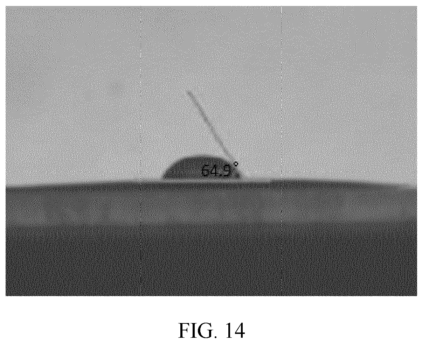

FIG. 13 is a diagram of a test result of a contact angle of the separator prepared in Example 1 of this application. FIG. 14 is a diagram of a test result of a contact angle of the separator prepared in Comparative Example 1 of this application. It can be seen from FIG. 13 that the contact angle is 125.4°. It can be seen from FIG. 14 that the contact angle is 64.9°.

It can be seen from Example 1 and Examples 4 to 7 that the time of the oxygen plasma treatment affects the percentage of the number of functional groups for improving surface infiltration. When the treatment time is shorter than 25 minutes, a longer time of the oxygen plasma treatment leads to a higher percentage of the number of functional groups for improving surface infiltration and a smaller corresponding contact angle. When the treatment time is longer than 35 minutes, a longer time of the oxygen plasma treatment leads to a lower percentage of the number of functional groups for improving surface infiltration and a larger corresponding contact angle. Without being confined to any theory, the inventor of this application believes that when the time of the oxygen plasma treatment is longer than 35 minutes, the carbon layer and the PCS layer may be damaged, and the separator substrate may be damaged, which causes a decrease in the number of grafted functional groups for improving surface infiltration. The inventor of this application believes that controlling the time of the oxygen plasma treatment within the range of 1 minute to 50 minutes in this application can graft more functional groups for improving surface infiltration, and controlling the time of the oxygen plasma treatment within a preferred range of 20 minutes to 30 minutes in this application can further graft more functional groups for improving surface infiltration without damaging the carbon layer and the PCS layer, thereby reducing the contact angle of the electrolyte for the separator, improving the infiltration of the electrolyte for the separator, and shortening infiltration time.

In contrast, the separator in Comparative Example 1 was not subjected to the methane plasma treatment, and therefore, no carbon layer was deposited. Without the oxygen plasma treatment, the percentage of the number of functional groups for improving surface infiltration is only 2%, the contact angle reaches 125.4°, the infiltration is poor for the electrolyte, and therefore, the infiltration time needs to be prolonged, which causes a decrease in production efficiency.

In addition, lithium-ion secondary batteries were prepared from the separators prepared in the foregoing Examples 1 to 7 and Comparative Example 1 below, and cycling performance of the lithium-ion secondary batteries was tested. The test results are shown in Table 2 below.

### (1) Preparation of lithium-ion secondary battery

### <Preparation of positive electrode plate>

A positive electrode active material lithium iron phosphate (LiFePO₄), a conductive agent carbon black, and a binder polyvinylidene fluoride were mixed at a mass ratio of 8:1:1, then N-methylpyrrolidone (NMP) was added as a solvent, and a resulting mixture was stirred by using a vacuum mixer until the system was uniform, to obtain a positive electrode slurry with a solid content of 65%. The positive electrode slurry was uniformly applied on one surface of the positive electrode current collector aluminum foil with a thickness of 12 µm, dried at 120°C, and cold pressed to obtain a positive electrode plate with a 60 µm thick positive electrode active material layer, and then, the positive electrode plate was obtained through processes such as tab forming and cutting.

### <Preparation of negative electrode plate>

A negative electrode active material artificial graphite, a conductive agent carbon black, and a binder polyacrylic acid were mixed at a mass ratio of 7:1.5:1.5, deionized water was added as a solvent, and a resulting mixture was stirred by using a vacuum mixer until the system was uniform, to obtain a negative electrode slurry with a solid content of 50%. The negative electrode slurry was uniformly applied on one surface of the negative electrode current collector copper foil with a thickness of 8 µm, dried at 110°C, and cold pressed to obtain a negative electrode plate with a thickness of 50 µm, and then, the negative electrode plate was obtained through processes such as tab forming and cutting.

### <Preparation of electrolyte>

In an environment with a water content less than 10 ppm, non-aqueous organic solvents ethylene carbonate and dimethyl carbonate were mixed at a volume ratio of 1:1 to obtain an electrolyte solvent, and then a lithium salt LiPF₆ was dissolved in the mixed solvent to prepare an electrolyte with a lithium salt concentration of 1 mol/L.

### <Preparation of separator>

The separators prepared in Examples 1 to 7 and Comparative Example 1 were used as separators separately, and an appropriate width was obtained via cutting according to sizes of the positive electrode plate and the negative electrode plate before use.

### <Preparation of lithium-ion secondary battery>

The positive electrode plate, the separator, and the negative electrode plate were sequentially stacked so that the separator was sandwiched between the positive electrode plate and the negative electrode plate to provide separation. Then the resulting stack was wound to obtain an electrode assembly. The electrode assembly was placed into an outer package and dried. Then electrolyte was injected, followed by processes such as vacuum packaging, standing, formation, and shaping, to obtain a lithium-ion secondary battery.

### (2) Cycling performance test of lithium-ion secondary battery

At 25°C, the lithium-ion secondary batteries prepared in Examples 1 to 7 and Comparative Example 1 were separately charged to 4.4 V at a constant current of 1/3C, then charged to a current of 0.05C at a constant voltage of 4.4 V, left standing for 5 minutes, and then discharged to 2.5 V at 1/3C. A capacity obtained was recorded as an initial capacity C₀. The foregoing steps were repeated for the same lithium-ion secondary battery, a discharge capacity Cₙ of the lithium-ion secondary battery after n cycles was also recorded, and then a capacity retention rate Pₙ of the lithium-ion secondary battery after each cycle satisfied Pₙ=Cₙ/C₀×100%. After 500 cycles, C₅₀₀ was recorded, and calculation was performed to obtain P₅₀₀=C₅₀₀/C₀×100%.

**Table 2 Performance test results of Examples 1 to 7 and Comparative Example 1**

| | Separator | Capacity retention rate of lithium-ion secondary battery after 500 cycles |
|---|---|---|
| Example 1 | Polypropylene film + CCS layer + PCS layer + carbon layer + functional group for improving surface infiltration | 97% |
| Example 2 | Polypropylene film + CCS layer + PCS layer + carbon layer + functional group for improving surface infiltration | 92% |
| Example 3 | Polypropylene film + CCS layer + PCS layer + carbon layer + functional group for improving surface infiltration | 90% |
| Example 4 | Polypropylene film + CCS layer + PCS layer + carbon layer + functional group for improving surface infiltration | 88% |
| Example 5 | Polypropylene film + CCS layer + PCS layer + carbon layer + functional group for improving surface infiltration | 91% |
| Example 6 | Polypropylene film + CCS layer + PCS layer + carbon layer + functional group for improving surface infiltration | 95% |
| Example 7 | Polypropylene film + CCS layer + PCS layer + carbon layer + functional group for improving surface infiltration | 93% |
| Comparative Example 1 | Polypropylene film + CCS layer + PCS layer | 85% |

Based on the above results, it can be seen from Examples 1 to 3 that in a case of separators with 50 µm and 150 µm thick carbon layers, capacity retention rates of lithium-ion secondary batteries after 500 cycles are lower than that in a case of a separator with 100 µm thick carbon layer. It can be seen that the thickness of the carbon layer affects the capacity retention rate of the lithium-ion secondary battery. That is, the time of the methane plasma treatment affects the capacity retention rate of the lithium-ion secondary battery. The inventor of this application believes that controlling the thickness of the carbon layer within the range of 20 nm to 175 nm (corresponding time of the methane plasma treatment is 1 minute to 30 minutes) can not only alleviate damage of oxygen plasma to the separator substrate, but also ensure the rapid migration of lithium ions in the separator. Controlling the thickness of the carbon layer within the preferred range of 75 nm to 125 nm (corresponding time of the methane plasma treatment is 10 minutes to 20 minutes) can further increase the capacity retention rate of the finally prepared lithium-ion secondary battery and prolong cycle life of the lithium-ion secondary battery.

It can be seen from Example 1 and Examples 4 to 7 that in a case that the time of the oxygen plasma treatment is 45 minutes, 35 minutes, 15 minutes, and 5 minutes, the capacity retention rate of the lithium-ion secondary battery after 500 cycles is lower than that in a case that the time of the oxygen plasma treatment is 25 minutes. It can be seen that the time of the oxygen plasma treatment ultimately affects the capacity retention rate of the lithium-ion secondary battery. The inventor of this application believes that controlling the time of the oxygen plasma treatment within the range of 1 minute to 50 minutes can graft more functional groups for improving surface infiltration, thereby reducing the contact angle of the electrolyte for the separator, improving the infiltration of the electrolyte for the separator, and shortening infiltration time. Controlling the time of the oxygen plasma treatment within a preferred range of 20 minutes to 30 minutes can further increase the capacity retention rate of the finally prepared lithium-ion secondary battery and prolong cycle life of the lithium-ion secondary battery.

In contrast, the separator in Comparative Example 1 was not subjected to the methane plasma treatment or the oxygen plasma treatment, the contact angle of the electrolyte is large for the separator, the infiltration of the electrolyte is poor for the separator, and the capacity retention rate of the lithium-ion secondary battery is also low, making it difficult to meet requirements for service life of the lithium-ion secondary battery in many application scenarios.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A separator, **characterized by** comprising a separator substrate and a carbon layer on at least one surface of the separator substrate, wherein a functional group for improving surface infiltration is grafted onto a surface on a side, farther away from the separator substrate, of the carbon layer.

2. The separator according to claim 1, **characterized in that** the functional group for improving surface infiltration is at least one selected from a hydroxyl group and a carboxyl group.

3. The separator according to claim 1, **characterized in that** a percentage of the number of functional groups for improving surface infiltration is 4% to 12%.

4. The separator according to claim 1, **characterized in that** a contact angle between the carbon layer and an electrolyte is 64.9° to 110.6°.

5. The separator according to claim 1, **characterized in that** a thickness ratio of the separator substrate to the carbon layer is 24:0.02 to 24:0.175, preferably 24:0.075 to 24:0.125.

6. The separator according to claim 1, **characterized in that** a thickness of the carbon layer is 20 nm to 175 nm, preferably 75 nm to 125 nm.

7. The separator according to claim 1, **characterized in that** the separator substrate comprises a polymer film, a ceramic coating, and a polymer adhesion coating, wherein the ceramic coating is located between the polymer film and the polymer adhesion coating, the carbon layer is located on a surface on a side, farther away from the ceramic coating, of the polymer adhesion coating, and the polymer film is at least one selected from a polypropylene film and a polyethylene film.

8. A preparation method of the separator according to any one of claims 1 to 7, **characterized by** comprising:
preparing a carbon layer on a surface of a separator substrate; and
grafting a functional group for improving surface infiltration onto a surface on a side, farther away from the separator substrate, of the carbon layer.

9. The preparation method according to claim 8, **characterized in that** the carbon layer is deposited on the surface of the separator substrate via a methane plasma treatment.

10. The preparation method according to claim 9, **characterized in that** time of the methane plasma treatment is 1 minute to 30 minutes, preferably 10 minutes to 20 minutes.

11. The preparation method according to claim 8, **characterized in that** the functional group for improving surface infiltration is grafted onto the surface on the side, farther away from the separator substrate, of the carbon layer via an oxygen plasma treatment.

12. The preparation method according to claim 11, **characterized in that** time of the oxygen plasma treatment is 1 minute to 50 minutes, preferably 20 minutes to 30 minutes.

13. A secondary battery, **characterized by** comprising the separator according to any one of claims 1 to 7 or a separator prepared using the preparation method of the separator according to any one of claims 8 to 12.

14. A battery module, **characterized by** comprising the secondary battery according to claim 13.

15. A battery pack, **characterized by** comprising the battery module according to claim 14.

16. An electric apparatus, **characterized by** comprising at least one selected from the secondary battery according to claim 13, the battery module according to claim 14, or the battery pack according to claim 15.
